# EUROPÄISCHE PATENTSCHRIFT

(11) **EP 2 238 497 B1**
(45) Veröffentlichungstag und Bekanntmachung des Hinweises auf die Patenterteilung: **31.12.2014**
(21) Anmeldenummer: 09705061.1
(22) Anmeldetag: 19.01.2009
(51) Int. Cl.: G01S 3/78, G02B 13/14, G02B 23/10, F41G 7/00

(54) **OPTISCHES SYSTEM ZUR PROJEKTION EINES IR- ODER UV-TESTSIGNALS MIT OPTISCHER AUSRICHTUNG DER PROJEKTIONSACHSE IM SICHTBAREN SPEKTRALBEREICH**
OPTICAL SYSTEM FOR PROJECTING AN IR OR UV TEST SIGNAL WITH AN OPTICAL ORIENTATION OF THE PROJECTION AXIS IN THE VISIBLE SPECTRAL REGION
SYSTÈME OPTIQUE POUR PROJETER UN SIGNAL D'ESSAI IR OU UV AVEC UNE ORIENTATION OPTIQUE DE L'AXE DE PROJECTION DANS LE DOMAINE SPECTRAL VISIBLE

(30) Priorität: 01.02.2008 DE 102008007101
(43) Veröffentlichungstag der Anmeldung: 13.10.2010
(73) Patentinhaber: Airbus Defence and Space GmbH, 85521 Ottobrunn (DE)
(72) Erfinder: BARTH, Jochen, 85764 Oberschleissheim (DE)
(74) Vertreter: Riegel, Werner
(86) Internationale Anmeldenummer: PCT/DE2009/000055
(87) Internationale Veröffentlichungsnummer: WO 2009/094979

(56) Entgegenhaltungen:
- GB-A- 2 428 929
- US-A- 3 974 383
- US-A- 4 038 547
- US-A- 5 084 780
- US-A- 5 194 986
- ROTH T ET AL: "Test projectors to demonstrate the performance of IR missile warning sensors" PROCEEDINGS OF SPIE - THE INTERNATIONAL SOCIETY FOR OPTICAL ENGINEERING - ELECTRO-OPTICAL AND INFRARED SYSTEMS: TECHNOLOGY AND APPLICATIONS V 2008 SPIE US, Bd. 7113, 2008, Seiten 71130U-1-71130U-10, XP002538869
- ROBINZON R ET AL: "Infrared scene generator for a flight motion simulator" PROCEEDINGS OF THE SPIE - THE INTERNATIONAL SOCIETY FOR OPTICAL ENGINEERING USA, Bd. 2020, 1993, Seiten 150-160, XP002538870 ISSN: 0277-786X
- BARTH J ET AL: "Anti-tank missile system MILAN: Optronic sensors for the new generation firing post MILAN ADT/ER" PROCEEDINGS OF SPIE - THE INTERNATIONAL SOCIETY FOR OPTICAL ENGINEERING - INFRARED TECHNOLOGY AND APPLICATIONS XXXIII 2007 SPIE US, Bd. 6542, 2007, Seiten 654239-1-654239-9, XP002538871

## Beschreibung

Die Erfindung betrifft ein optisches System zum Testen von Infrarot- oder Ultraviolett Sensoren gemäß dem Oberbegriff des Anspruchs 1.

Eine wachsende Zahl optischer Sensoren nutzt Spektralbereiche außerhalb des sichtbaren Lichts. Beispiele sind etwa Warnsensoren, die anfliegende Raketen entdecken sollen an Hand der optischen Signatur im ultravioletten oder im infraroten Spektrum. Solche Sensoren erfassen einen großen Raumwinkelbereich und sollen bei erkannter Gefahr auch die Richtung der Bedrohung angeben, damit Gegenmaßnahmen gezielt eingeleitet werden können.

Zur Prüfung solcher Sensoren wird ein optisches Testsignal in dem entsprechenden Spektralbereich erzeugt und in die Apertur des Sensors projiziert. Dabei kann eine präzise Ausrichtung der Projektionsachse erforderlich sein, etwa um die Auflösung und Genauigkeit der ausgegebenen Richtungsinformation zu bestimmen oder um ein stark gebündeltes Testsignal auch aus größerer Entfernung präzise auf die Sensorapertur zu richten. Letzteres ist der Fall, wenn ein Sensor in eingebautem Zustand außerhalb des Labors wegen eingeschränkter Zugänglichkeit aus größerer Entfernung zu Testzwecken stimuliert werden muß.

Es ist Stand der Technik, die Achsausrichtung eines Testprojektors durch eine "zweiäugige" optische Anordnung zu erreichen, bei der ein Projektor und ein Fernrohr getrennt voneinander aufgebaut sind. Kommerzielle Systeme zur Sensorstimulation werden unter dem Begriff "Barringas" z.B. von der Firma CI Systems (http://www.ci-systems.com/eo/htmls/article.aspx?C2004=12798) oder von der Firma Polytec (http://www.polytec.com/ger/ files/PH PS EO-Test 2007 06 D.pdf) angeboten.

Vor dem Einsatz eines solchen Testprojektors ist es erforderlich, die beiden optischen Achsen von Projektor und Fernrohr parallel zueinander auszurichten. Dazu wird in der Regel das Fernrohr auf einen in geeigneter Entfernung aufgestellten Sensor ausgerichtet und die optische Achse des Projektors so einjustiert, dass das Sensorsignal maximal wird. Die Genauigkeit der so erreichbaren Achsausrichtung ist begrenzt und für einen Test der Richtungsauflösung eines Warnsensors unzureichend.

Eine höhere Genauigkeit bei der Justage der optischen Achsen kann erreicht werden durch Autokollimation mit Hilfe eines geeigneten Testreflektors. Dies erfordert aber den Austausch der Strahlungsquelle im Projektor gegen einen geeigneten Detektor, der im Spektralbereich des Projektors empfindlich ist. Solche Detektoren sind in der Regel sehr teuer, insbesondere wenn ein gekühlter IR-Detektor erforderlich ist. Für diese Methode wird die Genauigkeit der Ausrichtung von der Genauigkeit des Testreflektors begrenzt, da dieser an zwei unterschiedlichen Bereichen von den beiden Strahlengängen getroffen wird, deren reflektierende Flächen idealerweise parallel zueinander stehen müssen.

US 4,603,780 offenbart eine computer-gesteuerte, elektrooptische Anordnung zur Bereitstellung von Szenen im Infrarotbereich unter Verwendung von drei Infrarotquellen zur Untersuchung von Flugkörpersucher (Sensoren). Das System verwendet eine Hardware-Schleife-Simulierung um die unterschiedlichen Infrarot-Szenen darzustellen. Durch den Szenen-Generator werden kollimierte Ziel-, Leuchtsatz- und Hintergrundbilde auf den zu untersuchenden Sensor mittels IR-Quellen und entsprechenden Blenden projiziert, wobei das Ziel bzw. Leuchtsatzbild mittels Strahlteiler mit dem Hintergrundbild kombiniert wird.

US 5,194,986 offenbart ein System zur Folgung eines geworfenen Flugkörpers, der eine Xenonlampe trägt, die einen elektromagnetischen Strahl im Infrarotbereich emittiert - dieser Strahl wird vom System erfasst. Das Ziel und die Umgebung wird mittels eines Teleskopsystems im sichtbaren Bereich beobachtet. Das System umfasst ein einziges Objektiv, die sowohl Strahlungen im Infrarot von der Lampe auf dem Flugkörper als auch im sichtbaren Bereich vom Ziel erfasst. Das sichtbare Licht durchläuft einen Strahlteiler (Porroprisma) und trifft auf eine Zielmarke einer Okularlinse während das Infrarotlicht vom Strahlteiler entlang eines Pfades reflektiert, von einer Anordnung detektiert und auf einem Bildschirm dargestellt wird. Die gemeinsame Linse der Eingangsoptik wird achromatisch ausgebildet derart, dass sowohl ein Bild des Infrarotstrahls des Flugkörpers als auch ein sichtbares Bild des Ziels und Flugkörpers durch eine einzige Blende anstelle durch zwei getrennten Blenden möglich ist. US 4,038547 beschreibt ein achromatisches Objektiv.

Aufgabe der Erfindung ist es, eine kompakte und einfach handhabbare Anordnung anzugeben, mit welcher es möglich ist, die Richtungsauflösung eines IR- oder UV-Sensors zu testen und einen solchen Sensor auch aus großer Entfernung mit einem Testsignal in optimaler Intensität zu stimulieren, wobei mit der Anordnung eine chromatische Korrektur einer IR-Optik möglich ist, so dass Strahlung im mittleren IR-Bereich und zumindest in einem Teil des sichtbaren Spektralbereichs mit vergleichbar gutem Korrektionszustand abgebildet werden kann.

Diese Aufgabe wird mit dem optischen System gemäß den Merkmalen des Anspruchs 1 gelöst. Vorteilhafte Ausführungen der Erfindung ergeben sich aus den Unteransprüchen.

Erfindungsgemäß wird die Aufgabe gelöst durch ein Optisches System zum Testen von IR- oder UV-Sensoren, umfassend eine Eingangsoptik, eine Ausgangsoptik mit einer auf der zugehörigen optischen Achse angeordneten Zielmarke, eine Strahlungsquelle, welche Strahlungsintensität im visuellen Spektralbereich und im infraroten oder ultravioletten Spektralbereich emittiert und einen Strahlteiler zur gleichzeitigen Sichtbarmachung einer von der Strahlungsquelle beleuchteten Objektszene mit der Zielmarke durch die Ausgangsoptik in das Auge eines Beobachters, wobei die Eingangsoptik ein Objektiv umfasst, dessen Abbildungseigenschaften im visuellen Spektralbereich gleich den Abbildungseigenschaften im infraroten oder ultravioletten Spektralbereich sind und der Strahlteiler ein dichroitischer Strahlteiler ist.

Die Eingangsoptik wird durch den Strahlteiler in zwei getrennte Strahlengängen mit zwei Bildebenen aufgeteilt. In der Bildebene des einen Strahlenganges (Teleskop) fällt das Bild einer beobachteten Objektszene im visuellen Spektralbereich mit der in dieser Bildebene angeordneten Zielmarke zur Markierung der optischen Achse zusammen und wird durch die Ausgangsoptik einem Beobachter zur Betrachtung dargeboten. In dem Strahlengang der anderen Bildebene (Projektor) ist die Strahlungsquelle auf der optischen Achse angeordnet.

Damit kombiniert die optische Anordnung die Strahlengänge des Projektors und des Teleskops über den Strahlteiler in einer Weise, dass die Eingangsoptik, die erfindungsgemäß als ein bispektrales Objektiv ausgebildet ist, gemeinsam genutzt wird

Das bispektrale Objektiv der Eingansoptik ist zweckmäßig als Achromat ausgebildet, dessen chromatischer Korrektionszustand das sekundäre Spektrum in den beiden genutzten Spektralbereichen minimiert. Wenn neben dem visuellen Bereich zur optischen Achsausrichtung der IR-Bereich zur Projektion des Testsignals genutzt wird, wird dieser Korrektionszustand gemäß der Erfindung durch eine positive CaF2-Linse und eine negative LiF-Linse erreicht.

Die Erfindung sowie weitere vorteilhafte Ausführungen werden anhand von Figuren näher erläutert. Es zeigen:
- Fig. 1: eine erste Ausführungsform eines optisches System gemäß der Erfindung,
- Fig. 2: eine Darstellung zur Achsausrichtung des optischen Systems gemäß Fig. 1,
- Fig. 3: eine erste Ausführungsform eines optisches System mit Bildaufrichtung gemäß der Erfindung,
- Fig. 4: eine zweite Ausführungsform eines optisches System mit Bildaufrichtung gemäß der Erfindung.

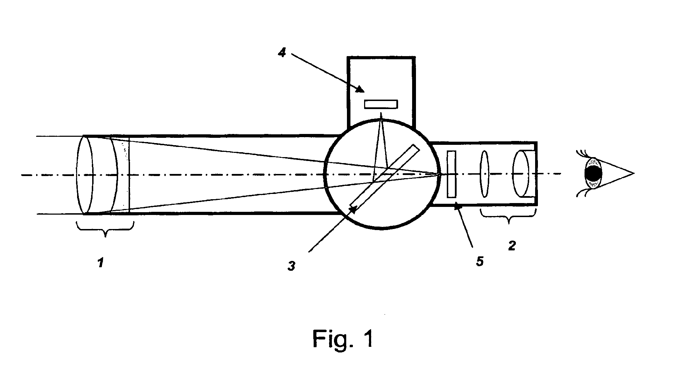

Fig. 1 zeigt eine erste Ausführungsform eines erfindungsgemäßen optischen Systems. Das optische System bildet hierbei einerseits ein Fernrohr mit einem bispektralen Objektiv als Eingangsoptik 1 und einer Ausgangsoptik 2 (Okular), wobei in der Zwischenbildebene eine Zielmarke 5 als Strichplatte zur Markierung der optischen Achse eingefügt ist, und andrerseits einen Projektor mit derselben Eingangsoptik 1 und einer Strahlungsquelle 4. Beide Strahlengänge werden durch den vom Objektraum gesehen hinter der Eingangsoptik angeordneten Strahlteiler 3 in Form einer dichroitischen Strahlteilerplatte getrennt.

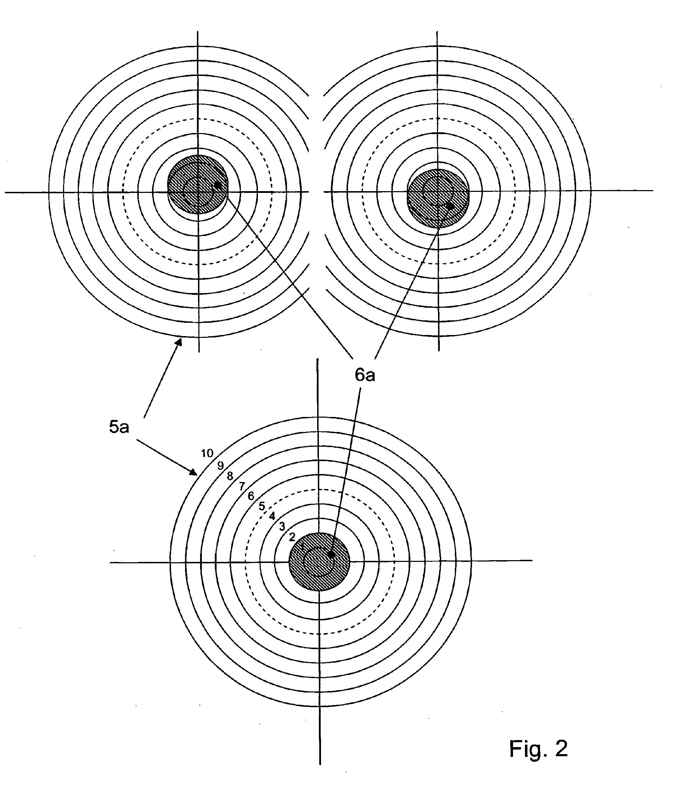

Diese Anordnung ist kompakter als der im Stand der Technik beschriebene "zweiäugige" Aufbau und besitzt den Vorteil, dass die Ausrichtung der beiden optischen Achsen zueinander besonders einfach und präzise gemessen werden kann. Vom Objektraum aus lassen sich beide Bildebenen der Eingangsoptik gleichzeitig im visuellen Spektralbereich beobachten, indem ein Beobachter ein Hilfsfernrohr benutzt. Fig. 2 zeigt ein Beispiel für das Abbild beider überlagerter Bildebenen, das sich dem Beobachter darbietet: die konzentrischen Ringe und das Fadenkreuz 5a stammen von einer Strichplatte, und der schraffierte Kreis 6a zeigt das Bild einer Strahlungsquelle mit runder emittierender Fläche. Die beiden optischen Achsen sind optimal zueinander justiert, wenn der schraffierte Kreis zu den Ringen und dem Fadenkreuz zentriert ist.

Die Präzision des Meßverfahrens hängt von der Brennweite des Objektivs und der in der Zwischenbildebene am Ort der Strichplatte 5 erreichten Ortsauflösung ab. Genauigkeiten von deutlich weniger als 1 mrad sind so leicht erreichbar.

Dieses Meßverfahren legt als vorteilhafte Ausführung des optischen Systems nahe, gemäß Anspruch 4 die Strahlungsquelle durch eine Lochblende in der Bildebene der Eingangsoptik zu ergänzen, um die Zentrierung der emittierenden Fläche in Bezug auf die Figur der Strichplatte zu erleichtern.

Wenn die emittierende Fläche der Strahlungsquelle deutlich größer ist als die Apertur der Lochblende, ist die Justage der Achsparallelität unabhängig von der exakten Position der Strahlungsquelle, so dass diese problemlos ausgetauscht werden kann. Damit ist es möglich, gemäß Anspruch 5 die Anforderung an die Strahlungsquelle, beide genutzten Spektralbereiche abzudecken, auf zwei unterschiedliche Strahlungsquellen aufzuteilen, die alternativ eingesetzt werden.

Mit diesen Erläuterungen wird deutlich, dass der erfindungsgemäße optische Aufbau einen IR- oder UV-Projektionsstrahlengang umfasst, dessen optische Achse sich präzise über das ebenfalls im Aufbau enthaltene Fernrohr visuell ausrichten lässt. Insbesondere ist dies mit Hilfe der Autokollimation an einer spiegelnden Referenzfläche möglich, da auch alle Bestandteile eines Autokollimationsfernrohrs im Aufbau enthalten sind.

Das Prinzip der Autokollimation ist bekannt. Autokollimation ist ein optisches Verfahren, bei dem ein Bild oder eine Strichmarke beobachtbar auf sich selbst abgebildet wird. Autokollimation ist ein empfindliches Verfahren, um kleine Richtungs- oder Neigungsfehler festzustellen. Sie wird allgemein mit einem auf unendlich eingestellten Autokollimationsfernrohr (Autokollimator) und einem Spiegel (Objektszene) durchgeführt. Die Genauigkeit dieser Messmethode ist unabhängig von der Entfernung Spiegel (Objektszene) zu Autokollimator.

Ein bispektrales Objektiv für die Projektion von IR-Strahlung im Bereich von 3µm bis 5µm Wellenlänge läßt sich aufbauen aus einer positiven CaF2-Linse und einer negativen LiF-Linse. Mit diesem Objektiv ist eine chromatische Korrektur einer IR-Optik möglich, die zu einem vergleichbar guten Korrektionszustand im mittleren IR-Bereich und zumindest in einem Teil des sichtbaren Spektralbereichs führt (Achromat). Durch Hinzufügen einer ZnSe-Linse mit großer negativer Brennweite kann die chromatische Korrektur noch weiter verbessert werden (Apochromat).

Im erfindungsgemäßen Aufbau wird mit dem Objektiv durch Autokollimation im roten Licht eine Achsausrichtung des Projektors, gebildet aus Lichtquelle 4 mit Apertur, Strahlteiler 3 und Objektiv 1, in Bezug auf eine Referenzfläche (Objektszene, nicht dargestellt) durchgeführt.

Dichroitische Strahlteiler sind Stand der Technik. Üblicherweise werden sie durch Multilayer-Schichten in Standard-Beschichtungsverfahren auf optischen Gläsern oder auch CaF2 (dann IR-transparent) oder auch mit moderner "Ion Plating" Technik auf temperaturbeständigen Substraten wie Saphir oder auch undotiertem YAG-Kristall hergestellt. Der dichroitische Strahlteiler sollte folgende Charakteristik haben: hohe Transmittanz im Spektralbereich des Projektors, im visuellen Spektralbereich ist ein Verhältnis zwischen Transmittanz und Reflektanz etwa im Bereich von 0,1 bis 10 brauchbar mit möglichst geringem Verlust durch Absorption, und zur Minimierung des Astigmatismus im transmitterten Strahlengang sollte das Strahlteiler-Substrat möglichst dünn sein. Durch eine Aufteilung von Reflexions- und Transmissionsanforderungen zwischen Vorder- und Rückseite lassen sich störende Doppelbilder vermeiden.. Reflexions- und Transmissionseigenschaften des Strahlteilers können auch so miteinander vertauscht werden, dass die Komponenten Strichplatte 5 und Okular 2 einerseits und Apertur 6 und Lichtquelle 4 anderseits miteinander die Plätze tauschen.

Zur Beleuchtung der Apertur 6 können entweder zwei getrennte Lichtquellen, etwa eine rote Leuchtdiode und ein Schwarzkörperstrahler, verwendet werden, die je nach Anwendungsfall untereinander ausgetauscht werden müssen, ohne die Ausrichtung der Apertur zu ändern, oder es kann eine IR-Quelle verwendet werden, die auf ca. 500°C bis 700°C geheizt wird, so dass die Rotglut im sichtbaren Spektralbereich genutzt werden kann.

Zur Achsjustage in Autokollimation ist die Kombination einer runden Lochblende 6 mit einer Okular-Strichplatte 5 vorteilhaft, die ein Muster konzentrischer Ringe enthält, wie in Abbildung 2 gezeigt. Der Bediener vergleicht im Okularbild die Lage des Bildes 6a der Apertur, beleuchtet im roten Licht der Lichtquelle 4, mit dem Muster 5a der Strichplatte. Ziel jeglicher Justage ist es, das Bild 6a (schraffierter Bereich) der Apertur zentrisch zum Strichmuster 5a auszurichten.

Zunächst werden die Achsen des Kollimators zueinander justiert durch laterale Ausrichtung der Apertur 6, wobei etwa ein Retroreflektor hoher Präzision vor dem Objektiv 1 positioniert wird, oder man beobachtet, wie oben bereits ausgeführt, Apertur 6 und Strichplatte 5 durch ein vor dem Objektiv 1 positioniertes Fernrohr (nicht dargestellt). Ist der Autokollimator in sich justiert, wird er auf eine spiegelnde, ebene Referenzfläche (nicht dargestellt) gerichtet und in Azimuth- und Elevationswinkel justiert. Ist durch diese Justage wiederum die zentrische Ausrichtung des Aperturbilds erreicht, so steht die optische Achse des Autokollimators - und damit auch die des Projektors - senkrecht auf der Ebene der Referenzfläche.

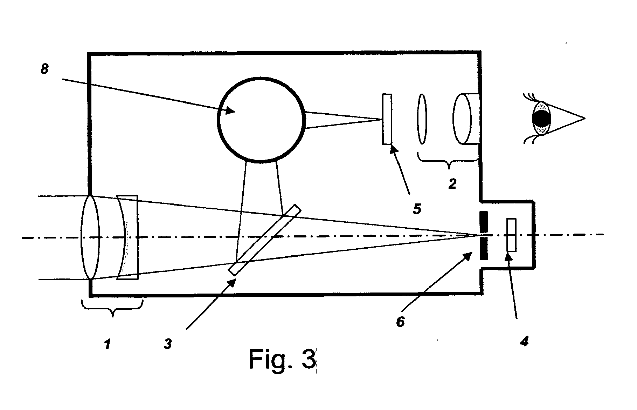

Soll der IR- oder UV-Projektionsstrahlengang auf die Apertur eines in größerer Entfernung positionierten Sensors mit Hilfe des Fernrohrs visuell ausgerichtet werden, ist es für den Benutzer hilfreich, wenn die beobachtete Objektszene aufrecht und seitenrichtig im Okular wiedergegeben wird. Fig. 3 zeigt eine erste Ausführungsform eines erfindungsgemäßen optischen Systems mit Bildaufrichtung.

Das optische System bildet hierbei ein Fernrohr, welches eine Eingangsoptik 1 mit einem bispektralen Objektiv, eine Ausgangsoptik 2 (Okular), einen Strahlteiler 3 in Form einer dichroitischen Strahlteilerplatte und eine IR-Strahlungsquelle 4 enthält. Im Strahlengang zwischen der Ausgangsoptik 2 und der Eingangsoptik 1 sind optische Mittel 8 zur seitenrichtigen und aufrechten Wiedergabe der beobachteten Objektszene vorhanden, außerdem ist die Austrittsachse des optischen Strahlengangs parallel zur Eintrittsachse. Die IR-Strahlungsquelle 4 ist zweckmäßig auf der optischen Achse des Objekts 1 angeordnet. Damit ist eine visuelle Achsausrichtung der optischen Achse des Objektivs 1 auf die Objektszene möglich.

Als Mittel 8 zur Bildaufrichtung kann z.B. ein Penta-Prisma mit einer Dachkante eingesetzt werden oder eine Kombination verschiedener Prismen und/oder Spiegel.

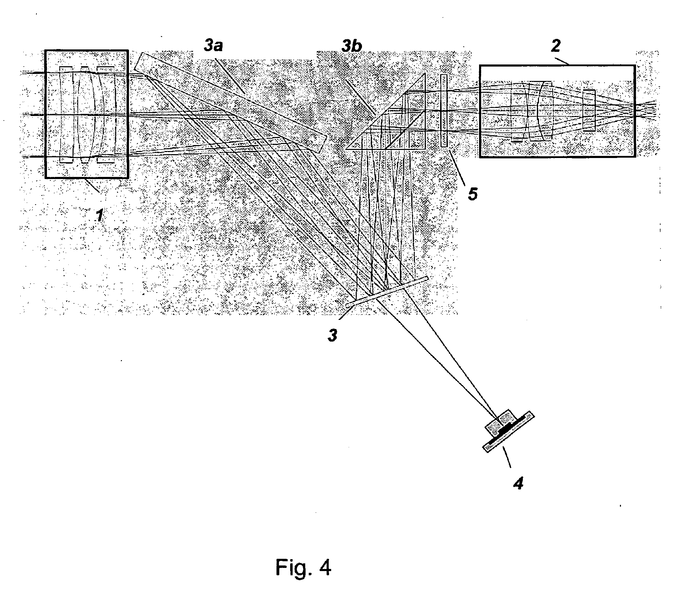

Fig. 4 zeigt eine spezielle Ausführungsform eines optischen Systems mit Bildaufrichtung. Dieses optische System weist ebenfalls eine Eingangsoptik 1 mit einem bispektralen Objektiv, eine Ausgangsoptik 2 (Okular), einen Strahlteiler 3 in Form einer dichroitischen Strahlteilerplatte und eine IR-Strahlungsquelle 4 auf. Im Strahlengang zwischen Objektiv 1 und Strahlteiler 3 ist ein Umlenkspiegel 3a vorhanden. Im Strahlengang zwischen dem Strahlteiler 3 und dem Okular 2 ist ein Amici-Prisma 3b mit Dachkante. Dabei dient der Umlenkspiegel 3a zur Bildaufrichtung und das Amici-Prisma 3b der seitenrichtigen Wiedergabe der beobachteten Objektszene. Bei dem in Fig. 4 dargestellten optischen System wird der sichtoptische Kanal dazu genutzt, wie mit einem Zielfernrohr die Apertur eines zu stimulierenden IR-Sensors (nicht dargestellt) zu erfassen, der sich in größerer Entfernung befindet. Damit kann z.B. die Funktion eines IR-Raketenwarnsensors an einem Flugzeug getestet werden, indem ein Angehöriger des Bodenpersonals den Sensor mit einem IR-Testsignal stimuliert ("Flight Line Tester").

## Patentansprüche

1. Optisches System zum Testen von IR- oder UV-Sensoren, umfassend
eine Eingangsoptik (1),
eine Ausgangsoptik (2) mit einer auf der zugehörigen optischen Achse angeordneten Zielmarke (5),
eine Strahlungsquelle (4), welche Strahlungsintensität im visuellen Spektralbereich und im infraroten oder ultravioletten Spektralbereich emittiert und einen Strahlteiler (3) zur gleichzeitigen Sichtbarmachung einer von der Strahlungsquelle (4) beleuchteten Objektszene mit der Zielmarke (5) durch die Ausgangsoptik (2) in das Auge (9) eines Beobachters,
wobei die Strahlung der Strahlungsquelle (4) vom Strahlteiler (3) in die Eingangsoptik (1) reflektiert wird und wobei die vom zu testenden Sensor zurückreflektierte Strahlung über die Eingangsoptik (1), durch den Strahlteiler (3) und die Zielmarke (5) in die Ausgangsoptik (2) gelangt,
**dadurch gekennzeichnet, dass**
die Eingangsoptik (1) ein Objektiv umfasst, dessen Abbildungseigenschaften im visuellen Spektralbereich gleich den Abbildungseigenschaften im infraroten oder ultravioletten Spektralbereich sind,
der Strahlteiler (3) ein dichroitischer Strahlteiler und
das Objektiv der Eingangsoptik (1) ein bispektrales Objektiv ist, umfassend eine positive CaF2-Linse und eine negative LiF-Linse.

2. Optisches System nach Anspruch 1,
**dadurch gekennzeichnet, dass**
die Strahlungsquelle (4) durch zwei alternativ eingesetzte Quellen gebildet ist, wobei die eine Quelle Strahlungsintensität im visuellen Spektralbereich und die andere Quelle im infraroten oder ultravioletten Spektralbereich emittiert.

3. Optisches System nach einem der vorangehenden Ansprüche,
**dadurch gekennzeichnet, dass**
auf der optischen Achse der Strahlungsquelle (4) eine Lochblende (6) zentriert angeordnet ist.

4. Optisches System einem der vorangehenden Ansprüche,
**dadurch gekennzeichnet, dass**
das optische System ein Fernrohr bildet, welches im Strahlengang zwischen der Ausgangsoptik (1) und der Eingangsoptik (2) optische Mittel (8) zur seitenrichtigen und aufrechten Wiedergabe der beobachteten Objektszene aufweist.

5. Optisches System nach Anspruch 4,
**dadurch gekennzeichnet, dass**
zwischen Eingangsoptik (1) und Strahlteiler (3) ein Umlenkspiegel (3a) und zwischen Strahlteiler (3) und Ausgangsoptik (2) ein Amici-Prisma (3b) mit Dachkante angeordnet ist.

## Claims

1. Optical system for testing IR or UV sensors, comprising input optics (1),
output optics (2) having a reticule (5) disposed on the associated optical axis, a radiation source (4), which emits radiation intensity in the visual spectral region and in the infrared or ultraviolet spectral region, and a beam splitter (3) for simultaneously visualizing an object scene illuminated by the radiation source (4) with the reticule (5) through the output optics (2) into the eye (9) of an observer,
wherein the radiation of the radiation source (4) is reflected into the input optics (1) by the beam splitter (3) and wherein the radiation reflected back by the sensor to be tested reaches the output optics (2) via the input optics (1), through the beam splitter (3) and the reticule (5),
**characterized in that**
the input optics (1) comprise a lens, the imaging properties of which in the visual spectral region are equal to the imaging properties in the infrared or ultraviolet spectral region,
the beam splitter (3) is a dichroic beam splitter and
the lens of the input optics (1) is a bi-spectral lens comprising a positive CaF2 lens and a negative LiF lens.

2. Optical system according to Claim 1,
**characterized in that**
the radiation source (4) is formed by two alternatively used sources, wherein one source emits radiation intensity in the visual spectral region and the other source in the infrared or ultraviolet spectral region.

3. Optical system according to one of the preceding claims,
**characterized in that**
an aperture stop (6) is arranged centered on the optical axis of the radiation source (4).

4. Optical system according to one of the preceding claims,
**characterized in that**
the optical system is formed by a telescope which, in the beam path between the output optics (1) and the input optics (2), has optical means (8) for the laterally correct and upright reproduction of the observed object scene.

5. Optical system according to Claim 4,
**characterized in that**
a deflection mirror (3a) is disposed between the input optics (1) and beam splitter (3), and an amici prism (3b) having a roof-like edge is disposed between the beam splitter (3) and output optics (2).

## Revendications

1. Système optique destiné à tester des capteurs IR et UV, comprenant une optique d'entrée (1),
une optique de sortie (2) comportant un réticule (5) disposé sur l'axe optique correspondant,
une source de rayonnement (4) qui émet une intensité de rayonnement dans le domaine spectral visuel et dans le domaine spectral infrarouge ou ultraviolet et un diviseur de faisceau (3) destiné à rendre simultanément visibles une scène objet éclairée par la source de rayonnement (4) et le réticule (5) à travers l'optique de sortie (2) dans l'oeil (9) d'un observateur,
dans lequel le rayonnement de la source de rayonnement (4) est réfléchi par le diviseur de faisceau (3) dans l'optique d'entrée (1) et dans lequel le rayonnement rétro-réfléchi par le capteur à tester atteint l'optique de sortie (2) par l'intermédiaire de l'optique d'entrée (1), à travers le diviseur de faisceau (3) et le réticule (5),
**caractérisé en ce que** l'optique d'entrée (1) comprend un objectif dont les propriétés de formation d'images dans le domaine spectral visuel sont identiques aux propriétés de formation d'images dans le domaine spectral infrarouge ou ultraviolet,
le diviseur de faisceau (3) est un diviseur de faisceau dichroïque et
l'objectif de l'optique d'entrée (1) est un objectif bi-spectral comprenant une lentille positive en CaF2 et une lentilles négative en LiF.

2. Système optique selon la revendication 1, **caractérisé en ce que** la source de rayonnement (4) est constituée de deux sources introduites de manière alternée, dans lequel la première source émet une intensité de rayonnement dans le domaine spectral visuel et l'autre source émet dans le domaine spectral infrarouge ou ultraviolet.

3. Système optique selon l'une quelconque des revendications précédentes, **caractérisé en ce qu'**un trou sténopéïque (6) est disposé de manière centrée sur l'axe optique de la source de rayonnement (4).

4. Système optique selon l'une quelconque des revendications précédentes, **caractérisé en ce que** le système optique forme un télescope qui comporte, sur le chemin optique entre l'optique de sortie (1) et l'optique d'entrée (2) des moyens optiques (8) destinés à reproduire la scène objet observée de manière parfaitement inclinée et redressée.

5. Système optique selon la revendication 4, **caractérisée en ce qu'**un miroir de déviation (3a) est disposé entre l'optique d'entrée (1) et le diviseur de faisceau (3) et **en ce qu'**un prisme d'Amici (3b) en toit est disposé entre le diviseur de faisceau (3) et l'optique de sortie (2).
